# EUROPÄISCHE PATENTSCHRIFT

(11) **EP 2 601 090 B1**
(45) Veröffentlichungstag und Bekanntmachung des Hinweises auf die Patenterteilung: **17.12.2014**
(21) Anmeldenummer: 11748570.6
(22) Anmeldetag: 29.07.2011
(51) Int. Cl.: B62D 5/04

(54) **VERFAHREN UND VORRICHTUNG ZUR SICHERHEITSABSCHALTUNG EINER EIEKTROMECHANISCHEN LENKUNG**
DEVICE AND PROCESS TO SAFELY SWITCH OFF AN ELECTRICAL POWER STEERING
SYSTEME ET PROCEDE POUR L'ARRET DE SECURITE DE LA DIRECTION ASSISTEE ELECTRIQUE

(30) Priorität: 04.08.2010 DE 102010033440
(43) Veröffentlichungstag der Anmeldung: 12.06.2013
(73) Patentinhaber: ThyssenKrupp Presta AG, FL-9492 Eschen (LI)
(72) Erfinder: BARANYAI, Zoltan, H-2053 Herceghalom (HU)
(74) Vertreter: LENZING GERBER
(86) Internationale Anmeldenummer: PCT/EP2011/003824
(87) Internationale Veröffentlichungsnummer: WO 2012/016669

(56) Entgegenhaltungen:
- DE-B3-102004 030 459

## Beschreibung

Die vorliegende Erfindung betrifft ein Verfahren zum Betrieb einer elektromechanischen Lenkung für Kraftfahrzeuge mit den Merkmalen des Oberbegriffs des Anspruchs 1 und eine Vorrichtung mit den Merkmalen des Oberbegriffs des Anspruchs 7.

Ein gattungsgemäßes Verfahren zur Sicherheitsabschaltung einer elektromechanischen Kraftfahrzeugservolenkung ist aus dem Dokument DE 10 2004 030 459 B3 bekannt. Bei diesem Verfahren wird im Fehlerfall ein Reluktanz- oder Reihenschlussmotor mittels eines Schalters oder durch Kurzschließen der Stromquelle abgeschaltet. Weitere Verfahrensschritte sind hier nicht erforderlich, da ein solcher Motor keine Permanentmagnete aufweist und deshalb kein Bremsmoment erzeugen kann. Für einen permanent erregten Motor ist dieses Verfahren nicht ohne weiteres geeignet.

Elektromechanische Lenkungen weisen üblicherweise einen permanent erregten Synchronmotor als Servomotor auf. Servomotoren dieser Bauart werden von einer Steuerung über einen Satz von MOSFETs angesteuert, wobei bei drei Phasenwicklungen insgesamt sechs MOSFETs vorgesehen sind. Je ein MOSFET schaltet die zugeordnete Phasenwicklung auf die Bordspannung oder das Massepotential. Dieses erfolgt mit hoher Frequenz, so dass in der Phasenwicklung der zeitliche Mittelwert als Effektivspannung wirkt.

Permanent erregte Synchronmotoren haben die Eigenschaft, bei elektrischen Fehlern wie beispielsweise bei Kurzschlüssen im Motor oder in der Ansteuerung ein Bremsmoment zu erzeugen, so dass ein derartiger Fehler nicht nur zu einem Ausfall der Lenkunterstützung führen kann, sondern der Lenkbewegung des Fahrers auch noch ein zusätzlicher Widerstand entgegengesetzt wird. Dies ist bei Lenksystemen für Kraftfahrzeuge aus Sicherheitsgründen nicht tolerierbar.

Es ist bekannt, zur Vermeidung dieses Zustandes eine Auftrennung der Phasenzuleitungen zum Motor oder im Sternpunkt des Motors vorzunehmen. Hierzu werden zum Teil im Stand der Technik elektromechanische Relais vorgeschlagen, die jedoch mechanisch für Anwendungen im Kraftfahrzeug nicht ausreichend robust und relativ teuer sind.

Aus der Druckschrift EP 0 857 135 B1 ist eine elektrische Servolenkung für ein Fahrzeug bekannt, das einen über ein Getriebe mit einer Lenkeinrichtung des Fahrzeugs verbundenen Elektromotor aufweist, wobei der Elektromotor ein bürstenloser Motor mit mehreren, an einem Sternpunkt verbundenen Phasenwicklungen ist. Dabei ist vorgesehen, dass in mindestens zwei Phasen des Motor ein Schaltmittel vorgesehen ist, welches zwischen einer geschlossenen Stellung, bei der in der Phasenwicklung Strom fließen kann, und einer offenen Stellung bewegbar ist, die verhindert, dass in der jeweiligen Phasenwicklung des Motors Strom fließt. Das Schaltmittel ist am Sternpunkt des Motors angeordnet, so dass beim Öffnen des Schaltmittels die Phasenwicklung zum Sternpunkt getrennt wird. Das Schaltmittel umfasst einen Schalter oder ein Relais, der beziehungsweise das zwischen einem Ende der Phasenwicklung und der Treiberschaltung des Motors in Reihe geschaltet ist.

Technische Lösungen, die Halbleiter als Schaltmittel umfassen, sind beispielsweise aus den Druckschriften DE 10 2004 023 713 A1, DE 10 2007 024 659 A1 und EP 2 112 051 A1 bekannt. Die letztgenannte Druckschrift zeigt mehrere Ausführungsbeispiele mit jeweils sechs MOSFETs für die Ansteuerung der Wicklungen und mit weiteren MOSFETs, die als Sicherheitsschalter zwischen der Treiberschaltung und den Motorwicklungen vorgesehen sind. Im Falle einer elektrischen Störung sollen diese Sicherheitsschalter die elektrische Verbindung zwischen der Treiberschaltung und den Wicklungen auftrennen. Die Wicklungen sind dann nicht kurzgeschlossen und können kein Bremsmoment erzeugen.

Zur Ansteuerung dieser Sicherheitsschalter ist es in der EP 2 112 051 A1 vorgesehen, den Strom durch die Wicklungen zu messen und zu überwachen. In Abhängigkeit von dem Strom, der durch die als Sicherheitsschalter vorgesehenen MOSFETs fließt, werden im Schadensfall die MOSFETs abgeschaltet, und zwar nur dann, wenn kein Strom durch den jeweiligen MOSFET fließt oder wenn der Strom in einer Richtung fließt, der eine parasitäre Diode einschaltet. Der MOSFET wird nicht abgeschaltet, wenn keine der beiden Bedingungen erfüllt ist. Auf diese Weise soll verhindert werden, dass der MOSFET in einem Zustand abgeschaltet wird, der zu einem Lawinendurchbruch führen könnte.

Für den Einsatz in Kraftfahrzeugen ist von Nachteil, dass die separate Messung der durch die Sicherheitsschalter fließenden Ströme aufwändig und entsprechend kostspielig ist und dass die Zeit, die für die beschriebene Prüfung vor der Abschaltung erforderlich ist, den Vorgang verlangsamt.

Es ist deshalb Aufgabe der vorliegenden Erfindung, bei einer elektrisch unterstützten Kraftfahrzeuglenkung mit als Sicherheitsschalter vorgesehenen MOSFETs ein Verfahren anzugeben, dass einfacher zu realisieren und im Betrieb schneller auszuführen ist.

Diese Aufgabe wird von einem Verfahren mit den Merkmalen des Anspruchs 1 gelöst.

Weil im Bedarfsfall die Steuerung zuerst jeden einzelnen MOSFET-Sicherheitsschalter abschaltet und dann die an den Anschlüssen des MOSFETs anstehenden Spannungen überprüft, kann die Ausbildung eines Lawinendurchbruchs oder eines entsprechenden Zustandes, bei dem eine Spannung zwischen Drain und Source größer als die maximale Batteriespannung ist, bei der die elektromechanische Lenkung noch Leistung abgeben muss, anhand dieser Spannungen ermittelt werden. Dieses Verfahren kann so schnell realisiert werden, dass, falls ein Lawinendurchbruch oder ein entsprechender Zustand gemessen wird, der betroffene MOSFET wieder eingeschaltet werden, bevor ein thermischer Schaden eintreten kann. Tritt kein Lawinendurchbruch auf, so bleibt der MOSFET abgeschaltet. Die Reaktionszeit dieser Verfahrensweise kann erheblich schneller zu der gewünschter Abschaltung führen, weil erst abgeschaltet und dann auf das Vorliegen von störenden Bedingungen geprüft wird, während im Stand der Technik zunächst ein Prüfung durchgeführt wird und dann, wenn keine störenden Bedingungen vorliegen, abgeschaltet wird.

Insbesondere sind bei einem Verfahren zur Sicherheitsabschaltung einer elektromechanischen Kraftfahrzeugservolenkung, bei der Sicherheitsschalter zur elektrischen Trennung eines Servomotors von einer Steuerung oder einem Bordnetz vorgesehen sind, folgende Schritte vorgesehen sind:
a) Empfangen eines Fehlersignals in einer Steuerung;
b) Ausgabe eines Abschaltsignals über Steuerleitungen an die Sicherheitsschalter;
c) Überprüfen der an den Sicherheitsschaltern anstehenden elektrischen Spannungen;
d) Entscheiden, ob das Abschaltsignal an jedem Sicherheitsschalter zu einem Abschalten ohne Lawinendurchbruch oder einen entsprechenden Zustand geführt hat;
e) wenn das Abschaltsignal an einem oder mehreren Sicherheitsschaltern nicht zu einem Abschalten ohne Lawinendurchbruch geführt hat, Wiedereinschalten derjenigen Sicherheitsschalter, die nicht ohne Lawinendurchbruch abgeschaltet werden konnten;
f) Wiederholen der Schritte b) bis e) bis zum erfolgreichen Abschalten aller Sicherheitsschalter.

Das Verfahren schützt den einzelnen Sicherheitsschalter gegen Überlast, wenn die Schritte b) bis e) in einem Zeitraum von weniger als 50 µs, insbesondere in einem Zeitraum von 1 µs bis 20 µs und besonders bevorzugt innerhalb von 2 µs durchgeführt werden.

Eine zeitnahe Abschaltung bei dennoch wirksamem Schutz der Sicherheitsschalter wird erreicht, wenn zwischen dem Schritt e) und dem Schritt f) eine Wartezeit von 500 µs bis 5 ms, insbesondere eine Wartezeit von 1 ms bis 2 ms liegt.

Die Aufgabe wird auch gelöst von einer Vorrichtung zur Durchführung des Verfahrens, bei der die Steuerung zur Auswertung der an den Sicherheitsschaltern anstehenden Spannungen eingerichtet und mit den Sicherheitsschaltern verbunden ist.

Insbesondere können die Sicherheitsschalter MOSFETs sein und die Steuerung kann die an den Source- oder Drain-Anschlüssen anstehenden Spannungen auswerten, um einen unerwünschten Lawinendurchbruch zu erkennen.

Ein besonders einfacher Aufbau ergibt sich, wenn an der elektrischen Leitung zwischen den Sicherheitsschaltern und den Phasenwicklungen des Servomotors Sensorleitungen zum Abgriff der dort anstehenden elektrischen Spannung vorgesehen sind.

Im übrigen ist die Schaltung, mit der das erfindungsgemäße Verfahren durchgeführt werden kann, einfacher und preiswerter als im Stand der Technik.

Nachfolgend werden Ausführungsbeispiele der vorliegenden Erfindung anhand der Zeichnung beschrieben. Es zeigen:
Figur 1: eine elektromechanische Servolenkung in einer schematischen Darstellung mit mehreren Möglichkeiten zur Anordnung des Servomotors;
Figur 2: eine Schaltung zur Ansteuerung eines permanent erregten Synchronmotors mit sechs MOSFETs zur Steuerung des Motorstroms und drei als MOSFETs ausgeführten Sicherheitsschaltern als Implementierungsbeispiel.

Der Begriff "Lawinendurchbruch" soll im Zusammenhang der Beschreibung und der Patentansprüche nicht im strengen Sinne verstanden werden, sondern steht auch für einen entsprechenden Zustand, bei dem eine Spannung zwischen Drain und Source größer als die maximale Batteriespannung ist, bei der die elektromechanische Lenkung noch Leistung abgeben muss, die jedoch infolge spannungsbegrenzender Maßnahmen nicht zur Ausbildung eines Lawinendurchbruchs im eigentlichen Sinne führt. Dennoch führt auch ein solcher Zustand nach kurzer Zeit zur Zerstörung des betroffenen MOSFETs.

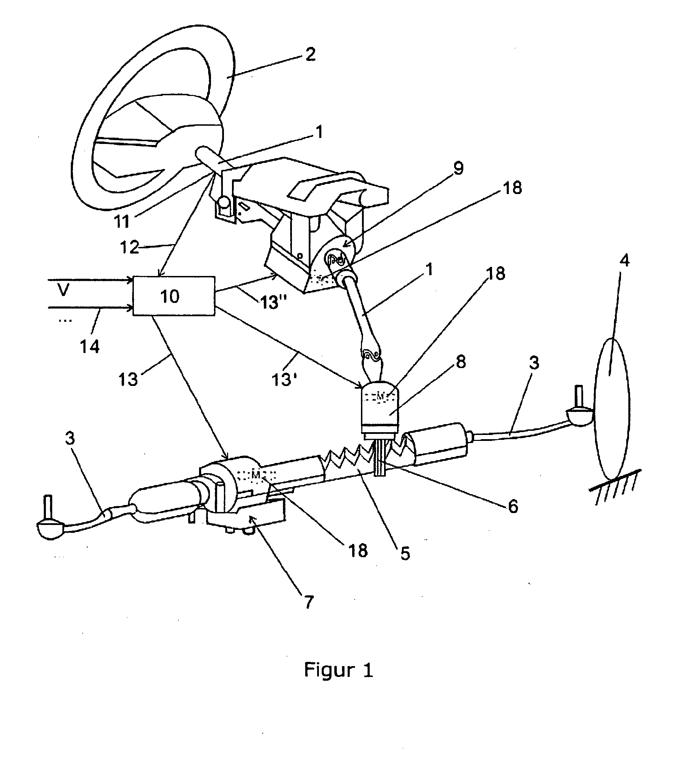

In der Fig. 1 ist eine elektromechanische Servolenkung schematisch dargestellt, wobei die Darstellung verschiedene Ausführungsformen illustrieren soll.

Eine Lenkwelle 1 ist zur Betätigung durch den Fahrer mit einem Lenkrad 2 verbunden. Spurstangen 3 sind in bekannter Weise mit gelenkten Rädern 4 des Kraftfahrzeugs verbunden. Eine Drehung der Lenkwelle 1 bewirkt eine axiale Verlagerung einer Zahnstange 5 mittels eines mit der Lenkwelle 1 drehfest verbundenen Ritzels 6.

Die elektromechanische Servolenkung kann ein lenkgetriebeseitiges Motorgehäuse 7, ein lenkritzelseitiges Motorgehäuse 8 oder ein lenksäulenseitiges Motorgehäuse 9 aufweisen. Die vorliegende Erfindung ist von der konkreten Bauart der Lenkung unabhängig. Die Motorgehäuse 7, 8 oder 9 sind mit einer Steuerung 10 verbunden, die unter anderem Drehmomentsignale von einem Drehmomentsensor 11 über eine Signalleitung 12 erhält und die entsprechende Steuersignale über Signalleitungen 13, 13' oder 13" an den in einem der Gehäusen 7, 8 oder 9 angeordneten Servoantrieb abgibt. Die Steuerung 10 selbst erhält Eingangssignale wie beispielsweise die Fahrzeuggeschwindigkeit sowie über eine Versorgungsleitung 14 die für den Betrieb erforderliche Bordspannung des Kraftfahrzeugs.

In den Gehäusen 7, 8 oder 9 ist ein Servomotor 18 vorgesehen, der letztlich in Abhängigkeit der Eingangssignale des Sensors 11 oder der übrigen, vom Fahrzeug gelieferten Eingangssignale angesteuert wird. Dieser Aufbau ist aus dem Stand der Technik bekannt.

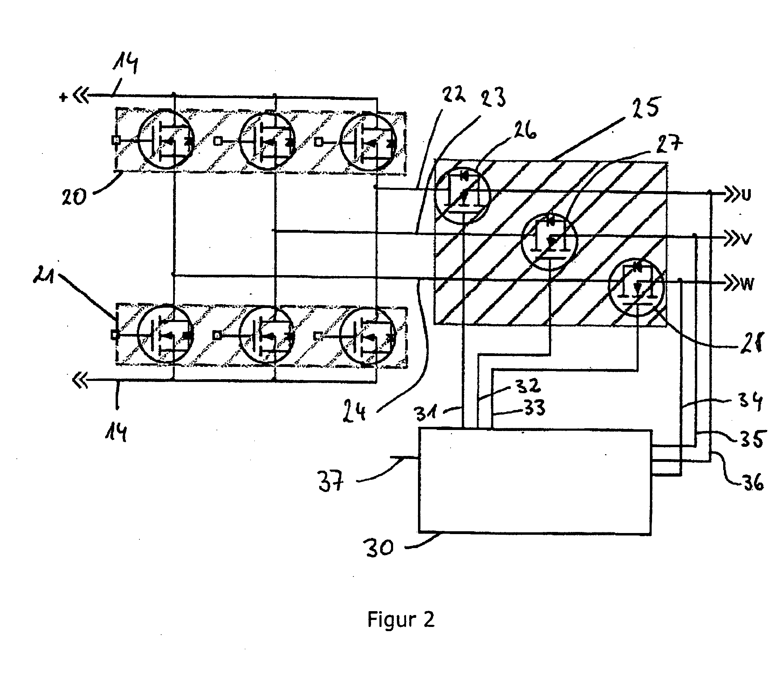

Bei den Servomotoren 18 handelt es sich bei der vorliegenden Erfindung um permanent erregte Synchronmotoren. Die Steuerung 10 ist, was die Ansteuerung der Phasenwicklungen des Servomotors 18 angeht, als Inverter aufgebaut. Diese Schaltung ist in der nachfolgenden Fig. 2 näher dargstellt.

Die Fig. 2 zeigt die prinzipielle Schaltung des Leistungsteils der Steuerung 10. Die Versorgungsleitungen 14 sind dem positiven und dem negativen Pol der Bordelektrik des Kraftfahrzeugs verbunden, die in üblicher Weise mit Gleichstrom arbeitet. Eine erste Gruppe 20 umfasst drei MOSFETs zur Beaufschlagung der drei Phasenwicklungen u, v und w mit der Bordspannung. Eine zweite Gruppe 21 von insgesamt drei weiteren MOSFETs ist für die Beaufschlagung der Phasenwicklungen u, v und w mit dem Massepotential vorgesehen. Die beiden Gruppen 20 und 21 speisen hierfür insgesamt drei Leitungen 22, 23 und 24.

Zwischen der Inverterschaltung, die die beiden Gruppen 20 und 21 umfasst, ist eine weitere Gruppe 25 geschaltet, die ebenfalls drei MOSFETs 26, 27 und 28 umfasst. Diese drei MOSFETs sind jeweils in Reihe zwischen dem Ausgang der Gruppen 20 und 21 und dem Eingang der Phasenwicklungen u, v und w eingeschaltet, so dass ein Strom durch die Phasenwicklungen nur dann fließen kann, wenn der jeweils zugeordnete MOSFET leitend geschaltet ist. Genauer gesagt sind die drei MOSFETs 26, 27 und 28 dieser Gruppe 25 so geschaltet, dass intrinsischen Dioden in die gleiche Richtung bezogen auf die Phasenwicklungen u, v und w zeigen. Bei dieser Beschaltung kann die Induktionsspannung des Motors 18 keinen Strom durch die MOSFETs 26, 27 und 28 treiben.

Eine Steuerung 30 ist mit den MOSFETs 26, 27 und 28 der dritten Gruppe 25 verbunden. Die Steuerung 30 weist hierfür Steuerleitungen 31, 32 und 33 auf. Diese Steuerleitungen sind jeweils mit den Steuerelektroden (Gate) der MOSFETs 26, 27 und 28 verbunden.

Ausgangsseitig der dritten Gruppe 25 ist zwischen den MOSFETs und den Phasenwicklungen u, v und w jeweils an der stromführenden Leitung eine Sensorleitung 34, 35 bzw. 36 angeschlossen. Die Sensorleitungen 34, 35 und 36 liefern der Steuerung 30 die an den Source-Anschlüssen der MOSFETs 26, 27 und 28 anliegenden Spannungen, die auch an den Phasenwicklungen u, v und w anstehen.

Die Steuerung 30 erhält über eine Eingangsleitung 37 ein Signal zum Einschalten oder Abschalten der dritten Gruppe 25, wodurch der Servomotor mit der Inverterschaltung, also in den beiden Gruppen 20 und 21 verbunden beziehungsweise von diesen getrennt wird.

Im Betrieb stellen die MOSFETs der dritten Gruppe 25 Sicherheitsschalter für das Abschalten des Servomotors im Falle einer elektrischen Fehlfunktion dar. Die Steuerung 30 arbeitet hierzu so, dass zunächst auf ein Einschaltsignal, welches an der Leitung 37 anliegt, die dritte Gruppe 25 über die Steuerleitungen 31, 32 und 33 eingeschaltet wird. Die Phasenwicklungen u, v und w können nun über die erste und zweite Gruppe 20 und 21 angesteuert werden, so dass der Servomotor in Abhängigkeit von der Steuerung 10 ein entsprechendes auf das Lenkgetriebe wirkendes Unterstützungsmoment erzeugt. Nur dann, wenn die Steuerung 10 oder eine andere Überwachungsschaltung einen elektrischen Fehler erkennt, der eine übermäßige Servounterstützung oder auch ein durch Wegfall der Servounterstützung unerwünschtes Bremsmoment des Elektromotors erkennt, wird über die Leitung 37 ein Abschaltbefehl an die Steuerung 30 gegeben. In diesem Fall werden die MOSFETs der dritten Gruppe über die Steuerleitungen 31, 32 und 33 praktisch sofort ausgeschaltet. Die Sensorleitungen 34, 35 und 36 geben die am Ausgang der MOSFETs 26, 27 und 28 anliegenden Spannungen an die Steuerung 30 weiter. Wenn das Ausschalten erfolgreich war, so liegt diese Spannung bei Null oder sie ist positiv. Wenn das Ausschalten nicht erfolgreich war, sich also ein Lawinendurchbruch ausgebildet hat, liegt an der betroffenen Leitung eine hohe negative Spannung an. Dies wird von der Steuerung 30 erkannt und der betroffene MOSFET sofort wieder eingeschaltet. Die bevorzugte Zeit zwischen dem Abschaltbefehl, dem Erkennen eines Lawinendurchbruchs und dem Wiedereinschalten des betroffenen MOSFETs beträgt etwa zwei Mikrosekunden (µs). Hierbei sind auch Zeiten bis 10 oder 20 µs noch tolerierbar. Diese Zeiten sind hinreichend kurz, um eine Beschädigung der MOSFETs der dritten Gruppe 25 auszuschließen.

Nach dem Wiedereinschalten des betroffenen MOSFETs ist dieser wieder leitend geschaltet, was nicht zu dem gewünschten Erfolg (Abschalten aller drei Phasenwicklungen) geführt hat. Deshalb wird der Versuch, diesen MOSFET auszuschalten, regelmäßig wiederholt. Bevorzugt erfolgt das erneute Ausschalten dieses betroffenen MOSFETs nach einer Wartezeit von etwa 1 - 2 ms. Wenn der durch die Induktivitäten des Motors fließende Strom soweit abgesunken ist, dass kein Lawinendurchbruch mehr entsteht, wird der MOSFET endgültig ausgeschaltet. Solange diese Ströme noch zu hoch sind, wird wieder über die jeweilige Sensorleitung ein Lawinendurchbruch detektiert und der MOSFET nach sehr kurzer Zeit wieder eingeschaltet, um eine Beschädigung durch Überlast zu verhindern.

Die in Figur 2 dargestellte Schaltung ist hinsichtlich der Anordnung der MOSFETs zwischen der Bordspannung des Kraftfahrzeugs und den Phasenwicklungen u, v und w des Servomotors aus dem Stand der Technik bekannt. Die Steuerung 30, die ihre Informationen über den Schaltzustand der MOSFETs der dritten Gruppe 25 mittels der Sensorleitungen 34, 35 und 36 erhält, weist die eingangs beschriebenen Vorteile auf. Das Abschalten der Versorgungsspannung der Phasenwicklungen erfolgt äußerst schnell. Ein nicht erfolgreiches Abschalten führt nicht zur Zerstörung des betroffenen MOSFETs. Die mit hoher Frequenz wiederholten Abschaltversuche führen dennoch zu einer zeitnahen Abschaltung aller drei MOSFETs der dritten Gruppe 25. Der beschriebene Schutz vor einer Überlast ermöglicht den Einsatz von baugleichen oder ähnlichen MOSFETs in der ersten Gruppe 20, der zweiten Gruppe 21 und der dritten Gruppe 25, ohne dass in der Gruppe 25 besondere Hochleistungsbauteile erforderlich wären.

Die vorliegende Erfindung, insbesondere das Abschaltverfahren mit Überprüfung auf ein eventuell nicht erfolgreiches Abschalten und gegebenenfalls wieder Einschalten des betroffenen MOSFETs kann auch in anderen Konfigurationen eingesetzt werden. So kann beispielsweise in den beiden Zuleitungen 14 vor der ersten Gruppe 20 und der zweiten Gruppe 21 jeweils ein MOSFET vorgesehen sein, der durch eine entsprechend angepasste Schaltung 30 betrieben und im Störungsfall abgeschaltet wird.

## Patentansprüche

1. Verfahren zur Sicherheitsabschaltung einer elektromechanischen Kraftfahrzeugservolenkung, bei der Sicherheitsschalter (26, 27, 28) zur elektrischen Trennung eines Servomotors von einer Steuerung oder einem Bordnetz vorgesehen sind, mit folgenden Schritten:
a) Empfangen eines Fehlersignals in einer Steuerung (30);
b) Ausgabe eines Abschaltsignals über Steuerleitungen (31, 32, 33) an die Sicherheitsschalter (26, 27, 28);
**dadurch gekennzeichnet, dass** weiter folgende Schritte vorgesehen sind:
c) Überprüfen der an den Sicherheitsschaltern (26, 27, 28) anstehenden elektrischen Spannungen;
d) Entscheiden, ob das Abschaltsignal an jedem Sicherheitsschalter (26, 27, 28) zu einem Abschalten ohne Lawinendurchbruch geführt hat;
e) wenn das Abschaltsignal an einem oder mehreren Sicherheitsschaltern (26, 27, 28) nicht zu einem Abschalten ohne Lawinendurchbruch geführt hat, Wiedereinschalten derjenigen Sicherheitsschalter (26, 27, 28), die nicht ohne Lawinendurchbruch abgeschaltet werden konnten;
f) Wiederholen der Schritte b) bis e) bis zum erfolgreichen Abschalten aller Sicherheitsschalter (26, 27, 28) ohne Lawinendurchbruch.

2. Verfahren nach Anspruch 1, **dadurch gekennzeichnet, dass** die Schritte b) bis e) in einem Zeitraum von weniger als 50 µs durchgeführt werden.

3. Verfahren nach einem der vorhergehenden Ansprüche,
**dadurch gekennzeichnet, dass** die Schritte b) bis e) in einem Zeitraum von 1 µs bis 20 µs durchgeführt werden.

4. Verfahren nach einem der vorhergehenden Ansprüche,
**dadurch gekennzeichnet, dass** die Schritte b) bis e) in einem Zeitraum von 2 µs durchgeführt werden.

5. Verfahren nach einem der vorhergehenden Ansprüche,
**dadurch gekennzeichnet, dass** zwischen dem Schritt e) und dem Schritt f) eine Wartezeit von 500 µs bis 5 ms liegt.

6. Verfahren nach einem der vorhergehenden Ansprüche,
**dadurch gekennzeichnet, dass** zwischen dem Schritt e) und dem Schritt f) eine Wartezeit von 1 ms bis 2 ms liegt.

7. Vorrichtung zur Durchführung des Verfahrens nach einem der Ansprüche 1 bis 6, **dadurch gekennzeichnet, dass** die Steuerung (30) zur Auswertung der an den Sicherheitsschaltern (26, 27, 28) anstehenden Spannungen eingerichtet und mit den Sicherheitsschaltern (26, 27, 28) verbunden ist.

8. Vorrichtung nach Anspruch 7, **dadurch gekennzeichnet, dass** die Sicherheitsschalter (26, 27, 28) MOSFETs sind und dass die Steuerung (30) die an den Source- und/oder Drain-Anschlüssen anstehenden Spannungen auswertet.

9. Vorrichtung nach einem der vorhergehenden Ansprüche 7 oder 8,
**dadurch gekennzeichnet, dass** an der elektrischen Leitung zwischen den Sicherheitsschaltern (26, 27, 28) und den Phasenwicklungen (u, v, w) des Servomotors (18) Sensorleitungen (34, 35, 36) zum Abgriff der dort anstehenden elektrischen Spannung vorgesehen sind.

## Claims

1. Method for the safety shutdown of an electromechanical motor-vehicle power steering system, in which safety switches (26, 27, 28) are provided for electrically disconnecting a servomotor from a controller or a vehicle power supply, with the following steps:
a) receiving of a fault signal in a controller (30);
b) outputting of a switch-off signal via control lines (31, 32, 33) to the safety switches (26, 27, 28);
**characterised in that** the following steps are further provided for:
c) checking of the electric voltages which prevail at the safety switches (26, 27, 28);
d) deciding whether the switch-off signal has led to a switch-off at every safety switch (26, 27, 28) without an avalanche breakdown;
e) if the switch-off signal has not led to a switch-off at one or more safety switches (26, 27, 28) without an avalanche breakdown, switching on again of those safety switches (26, 27, 28) which could not be switched off without an avalanche breakdown;
f) repetition of steps b) to e) until all safety switches (26, 27, 28) are successfully switched off without an avalanche breakdown.

2. Method according to Claim 1, **characterised in that** steps b) to e) are performed within a timeframe of less than 50 µs.

3. Method according to one of the above claims, **characterised in that** steps b) to e) are performed within a timeframe of between 1 µs and 20 µs.

4. Method according to one of the above claims, **characterised in that** steps b) to e) are performed within a timeframe of 2 µs.

5. Method according to one of the above claims, **characterised in that** between step e) and step f) there is a waiting time of between 500 µs and 5 ms.

6. Method according to one of the above claims, **characterised in that** between step e) and step f) there is a waiting time of between 1 ms and 2 ms.

7. Device for performing a method according to one of Claims 1 to 6, **characterised in that,** the controller (30) is configured to evaluate the voltages prevailing at the safety switches (26, 27, 28) and is connected with the safety switches (26, 27, 28).

8. Device according to Claim 7, **characterised in that** the safety switches (26, 27, 28) are MOSFETs and **in that** the controller (30) evaluates the voltages prevailing at the source and/or drain connections.

9. Device according to one of the above Claims 7 or 8, **characterised in that** on the electrical line between the safety switches (26, 27, 28) and the phase windings (u, v, w) of the servomotor (18) sensor lines (34, 25, 36) are provided for tapping the electrical voltage prevailing there.

## Revendications

1. Procédé d'arrêt de sécurité d'une direction assistée électromécanique d'un véhicule automobile, dans lequel des commutateurs de sécurité (26, 27, 28) sont prévus qui permettent de séparer électriquement un servomoteur d'une commande ou d'un réseau de bord, ledit procédé comprenant les étapes suivantes :
a) recevoir un signal d'erreur dans une commande (30) ;
b) délivrer un signal d'arrêt aux commutateurs de sécurité (26, 27, 28) par l'intermédiaire de lignes de commande (31, 32, 33) ;
**caractérisé en ce que** l'on prévoit les étapes ultérieures suivantes :
c) vérifier les tensions électriques présentes au niveau des commutateurs de sécurité (26, 27, 28) ;
d) déterminer si le signal d'arrêt a provoqué un arrêt sans rupture par avalanche au niveau de chacun des commutateurs de sécurité (26, 27, 28) ;
e) si le signal d'arrêt n'a pas provoqué un arrêt sans rupture par avalanche au niveau d'un ou de plusieurs commutateurs de sécurité (26, 27, 28), remettre sous tension les commutateurs de sécurité (26, 27, 28) qui n'ont pas pu être arrêtés sans rupture par avalanche ;
f) reprendre les étapes b) à e) jusqu'à ce que tous les commutateurs de sécurité (26, 27, 28) aient été correctement arrêtés sans rupture par avalanche.

2. Procédé selon la revendication 1, **caractérisé en ce que**, les étapes b) à e) sont réalisées dans un laps de temps inférieur à 50 µs.

3. Procédé selon une des revendications précédentes, **caractérisé en ce que** les étapes b) à e) sont réalisées dans un laps de temps allant de 1 µs à 20 µs.

4. Procédé selon une des revendications précédentes, **caractérisé en ce que**, les étapes b) à e) sont réalisées dans un laps de temps de 2 µs.

5. Procédé selon une des revendications précédentes, **caractérisé en ce qu'**il y a un temps d'attente allant de 500 µs à 5 ms entre l'étape e) et l'étape f).

6. Procédé selon une des revendications précédentes, **caractérisé en ce qu'**il y a un temps d'attente allant de 1 ms à 2 ms entre l'étape e) et l'étape f).

7. Dispositif permettant l'exécution du procédé selon une des revendications 1 à 6, **caractérisé en ce que** la commande (30) est mise en place pour l'évaluation des tensions électriques présentes au niveau des commutateurs de sécurité (26, 27, 28) et est reliée aux commutateurs de sécurité (26, 27, 28).

8. Dispositif selon la revendication 7, **caractérisé en ce que** les commutateurs de sécurité (26, 27, 28) sont des MOSFET et que la commande (30) évalue les tensions présentes au niveau des raccordements de source et/ou de drain.

9. Dispositif selon une des revendications 7 ou 8 précédentes, **caractérisé en ce que** l'on prévoit au niveau de la direction électrique, entre les commutateurs de sécurité (26, 27, 28) et les enroulements de phase (u, v, w) du servomoteur (18), des lignes de capteurs (34, 35, 36) pour prélever les tensions présentes à ce niveau.
